# EUROPÄISCHE PATENTSCHRIFT

(11) **EP 3 932 650 B1**
(45) Veröffentlichungstag und Bekanntmachung des Hinweises auf die Patenterteilung: **24.04.2024**
(21) Anmeldenummer: 21180416.6
(22) Anmeldetag: 18.06.2021
(51) Int. Cl.: B29C 63/26, B29C 63/00

(54) **MONTAGEHILFEVORRICHTUNG, SYSTEM UND VERFAHREN ZUR ANORDNUNG EINER INNENHÜLLE IN EINEM FLÜSSIGKEITSBEHÄLTER, VERWENDUNG DER MONTAGEHILFEVORRICHTUNG**
MOUNTING ASSISTANCE DEVICE, SYSTEM AND METHOD FOR ARRANGING AN INNER COVER IN A LIQUID CONTAINER, USE OF THE MOUNTING ASSISTANCE DEVICE
DISPOSITIF D'AIDE AU MONTAGE, SYSTÈME ET PROCÉDÉ DE MISE EN PLACE D'UN MANCHON INTERNE DANS UN RÉCIPIENT DE LIQUIDE, UTILISATION DU DISPOSITIF D'AIDE AU MONTAGE

(30) Priorität: 30.06.2020 DE 102020117230
(43) Veröffentlichungstag der Anmeldung: 05.01.2022
(73) Patentinhaber: Liquid CONcept GmbH & Co. KG, 22179 Hamburg (DE)
(72) Erfinder: SIEBEL, Sascha, 49356 Diepholz (DE)
(74) Vertreter: Seemann & Partner Patentanwälte mbB

(56) Entgegenhaltungen:
- DE-U1-202019 102 702
- DE-U1-202020 102 645

## Beschreibung

Die Erfindung betrifft eine Montagehilfevorrichtung, welche dazu eingerichtet ist, die Montage einer Innenhülle in einem Innenraum eines Flüssigkeitsbehälters zu unterstützen. Ferner betrifft die Erfindung ein System umfassend einen Flüssigkeitsbehälter, der einen Innenraum umschließt, eine Innenhülle, die zur Anordnung in dem Innenraum des Flüssigkeitsbehälters eingerichtet ist, eine Unterdruckquelle und eine solche Montagehilfevorrichtung. Die Erfindung betrifft ferner ein Verfahren zum Anordnen einer Innenhülle in einem Innenraum eines Flüssigkeitsbehälters und die Verwendung einer Montagehilfevorrichtung zum Anordnen einer Innenhülle in einem Innenraum eines Flüssigkeitsbehälters.

Flüssigkeitsbehälter, die als sog. IBCs (Intermediate Bulk Container) in verschiedenen genormten Größen in unterschiedlichen Industriebereichen weit verbreitet sind, haben den Vorteil, dass sie einfach transportiert, gestapelt, aufbewahrt und wiederverwendet werden können. Ein IBC ist ein Container, der für den Transport und die Lagerung flüssiger und rieselfähiger Stoffe geeignet ist. Solche Behälter kommen zur Lagerung und zum Transport von Produkten, Zwischen- oder Vorprodukten beispielsweise in der Lebensmittel-, Chemie-, Kosmetik- und Pharmaindustrie zum Einsatz. Sie werden vor allem dann eingesetzt, wenn mittlere Mengen eines Stoffes transportiert oder gelagert werden müssen. Ein IBC ist typischerweise auf einer Industrie-Palette angeordnet und an dieser befestigt. Übliche Fassungsvermögen liegen zwischen 300 I und 1.250 I. Ein IBC ist somit gut handhabbar und lässt sich beispielsweise mit einem Flurförderzeug transportieren.

Der typische Aufbau eines IBC besteht aus einem äußeren Gitterkäfig, der den eigentlichen Flüssigkeitsbehälter umschließt, welcher in den meisten Fällen aus PE hergestellt ist. Zum Befüllen weist der IBC üblicherweise an seiner Oberseite und bevorzugt mittig einen Schraubstutzen auf, der mithilfe eines Schraubdeckels verschlossen wird. Vielfach ist außerdem im unteren Bereich des IBC eine Auslauföffnung vorhanden, über die der Behälter entleert werden kann.

Wie bereits erwähnt, ist es von großem Vorteil, dass IBCs wiederverwendet werden können. Hierzu ist es jedoch erforderlich, den Flüssigkeitsbehälter, also beispielsweise eine PE-Blase, zu reinigen. Die Reinigung oder Aufbereitung eines IBC ist ein von Hand durchgeführter Vorgang, bei dem der Behälter ausgespritzt und anschließend ausgespült werden muss. Die Reinigung des Flüssigkeitsbehälters ist zeit- und arbeitsaufwendig und stellt daher einen nicht unerheblichen Kostenfaktor dar. Außerdem sind der Erfolg der Reinigung, der während der Reinigung zu betreibende Aufwand und die einzusetzenden Reinigungsmittel von der Art und dem Grad der Verschmutzung abhängig. Teilweise können auch mit großem Aufwand hohe Reinheitsanforderungen nicht mehr erfüllt werden, so dass das Einsatzgebiet des aufbereiteten IBC begrenzt ist.

Zur Vermeidung solcher Nachteile ist in der DE 20 2014 105 594 U1 vorgeschlagen worden, eine Innenhülle in einem Innenraum des Flüssigkeitsbehälters anzuordnen. Eine solche Innenhülle kann nach jedem Gebrauch des IBC ausgetauscht werden, so dass faktisch nach dem Austausch der Innenhülle ein absolut neuer IBC bereitsteht. So können auch höchste Reinheitsanforderungen erfüllt werden. Außerdem entfällt die Notwendigkeit, den IBC zu reinigen, was dessen Aufbereitung beschleunigt und zudem einen Kostenvorteil darstellt.

Die Montage einer Innenhülle in einem Flüssigkeitsbehälter, also beispielsweise in der PE-Blase eines IBC, ist ein nicht immer einfacher Vorgang. Zur Unterstützung bei der Montage umfasst die aus der o.g. DE 20 2014 105 594 U1 bekannte Innenhülle eine Entfaltungshilfe.

Aus dem Dokument DE 20 2019 102 702 U1 ist ein IBC bekannt, durch dessen Öffnung ein Inliner eingebracht wird. Dieser umfasst einen Adapter zur lösbaren Anbringung des Inliners an der Öffnung des IBC, wobei der Adapter zum Befüllen oder Entleeren des Inliners durch den Adapter und die Öffnung des IBCs bestimmt und geeignet ist. Der Inliner und der Adapter bilden einen vorgefertigten Verbund. Eine Entleerungshilfe ragt in den Inliner und ist an der Öffnung des IBC festlegbar. Die Entleerungshilfe ist als eine Entgasungslanze ausgebildet, die zum Entgasen des Inliners bei der Entnahme des Inliners aus dem Transportbehälter bestimmt ist und im montierten Zustand an einem die Öffnung des IBC verschließbaren, mit dem Adapter des Inliners zusammenwirkenden Deckel einsetzbar ist.

Es ist eine Aufgabe der Erfindung, eine Montagehilfevorrichtung und ein Verfahren anzugeben, mit der/dem die Anordnung einer Innenhülle in einem Innenraum eines Flüssigkeitsbehälters verbessert werden kann. Ferner ist es eine Aufgabe der Erfindung, ein System, umfassend einen Flüssigkeitsbehälter, eine Innenhülle und eine Montagehilfevorrichtung anzugeben, mit dem die Anordnung der Innenhülle im Innenraum des Flüssigkeitsbehälters verbessert werden kann. Schließlich soll eine Verwendung einer solchen Montagehilfevorrichtung angegeben werden, mit der die Anordnung einer Innenhülle in einem Innenraum eines Flüssigkeitsbehälters verbessert werden kann.

Die Aufgabe wird gelöst durch eine Montagehilfevorrichtung, welche dazu eingerichtet ist, die Montage einer Innenhülle in einem Innenraum eines Flüssigkeitsbehälters zu unterstützen, umfassend ein sich in einer Axialrichtung erstreckendes Führungsrohr, welches zur Befestigung an einem eine Öffnung umgebenden Schraubstutzen des Flüssigkeitsbehälters eingerichtet ist. Die erfindungsgemäße Montagehilfevorrichtung zeichnet sich gegenüber dem Stand der Technik durch ein in der Axialrichtung verschiebbar in dem Führungsrohr geführtes Innenbauteil aus, wobei das Innenbauteil eine Halterung umfasst, die dazu eingerichtet ist, einen eine Öffnung der Innenhülle umgebenden Adapter der Innenhülle, der im montierten Zustand der Innenhülle dazu eingerichtet ist, an dem Schraubstutzen befestigt zu werden, lösbar zu halten, und wobei das Innenbauteil zumindest einen Absaugkanal aufweist, der sich zwischen einem Förderende und einem Absaugende erstreckt, wobei das Förderende fluidisch mit einer Unterdruckquelle koppelbar ist und das Ansaugende in einem Abschnitt aus dem Innenbauteil ausmündet, der in einer Radialrichtung zwischen einer Innenseite des Führungsrohrs und der Halterung liegt, so dass durch den Absaugkanal zwischen einer Außenseite der Innenhülle und einer Innenseite des Flüssigkeitsbehälters vorhandenes Gas mit der Unterdruckquelle absaugbar ist.

Die Montagehilfevorrichtung gemäß Aspekten der Erfindung erlaubt es, die Innenhülle faltenfrei oder nahezu faltenfrei im Innenraum des Flüssigkeitsbehälters anzuordnen. Hierzu wird die Luft, welche sich zwischen der Innenseite des Flüssigkeitsbehälters und der Außenseite der Innenhülle befindet, mithilfe der Montagehilfevorrichtung abgesaugt. Dies erfolgt mithilfe der Unterdruckquelle, bei der es sich beispielsweise um einen Radialverdichter mit großem Fördervolumen handelt. Außerdem erlaubt es die Montagehilfevorrichtung vorteilhaft, die Innenhülle in wesentlich kürzerer Zeit in dem Innenraum des Flüssigkeitsbehälters anzuordnen. Der Montagevorgang kann also beschleunigt werden.

Umfasst der Flüssigkeitsbehälter eine zweite Öffnung, beispielsweise einen Auslauf zum Entleeren des Flüssigkeitsbehälters, so wird die Innenhülle beispielsweise durch diese zweite Öffnung in den Innenraum des Flüssigkeitsbehälters eingebracht und an einem an dieser zweiten Öffnung beispielsweise vorhandenen Schraubstutzen luftdicht mit dem Flüssigkeitsbehälter verbunden. Hierzu weist die Innenhülle beispielsweise einen zweiten geeigneten Adapter, Kragen oder dergleichen auf.

Anschließend wird der (erste) Adapter der Innenhülle durch den Schraubstutzen des Flüssigkeitsbehälters in Richtung des Außenraums gezogen und an der Halterung des Innenbauteils befestigt. Zuvor wird das Führungsrohr der Montagehilfevorrichtung auf den Schraubstutzen aufgesetzt, beispielsweise auf diesen aufgeschraubt. Die Verbindung zwischen dem Führungsrohr der Montagehilfevorrichtung und dem Schraubstutzen des Flüssigkeitsbehälters ist bevorzugt fluiddicht, d. h. insbesondere luftdicht. Hierzu ist an dem Führungsrohr beispielsweise eine geeignete Dichtung vorgesehen. Nun wird das Innenbauteil, an welchem der Adapter der Innenhülle befestigt ist, in das Führungsrohr eingesetzt und der Absaugvorgang kann beginnen. Vorteilhaft erlaubt die Montagehilfevorrichtung eine schnelle und faltenfreie Montage der Innenhülle in dem Flüssigkeitsbehälter.

Gemäß einer vorteilhaften Ausführungsform ist die Montagehilfevorrichtung dadurch fortgebildet, dass das Führungsrohr zur fluiddichten Befestigung auf dem Schraubstutzen eingerichtet ist. Diese Abdichtung erfolgt beispielsweise durch die bereits erwähnte Dichtung. Ferner ist insbesondere vorgesehen, dass zwischen dem Innenbauteil und dem Führungsrohr eine Dichtung vorhanden ist, welche das Innenbauteil gegenüber dem Führungsrohr fluiddicht abdichtet.

Das Innenbauteil ist gegenüber dem Führungsrohr beispielsweise mit einer Dichtlippe abgedichtet, welche sich entlang des Umfangs an eine Innenwand des Führungsrohrs anlegt. Alternativ oder zusätzlich kann eine O-Ring Dichtung vorgesehen sein, welche zwischen einer Innenwand des Schraubstutzens und einer Außenwand des Innenbauteils, beispielsweise in einer Nut des Innenbauteils, angeordnet ist. Zum Abdichten des Führungsrohrs gegenüber dem Schraubstutzen ist beispielsweise eine Flachdichtung, eine O-Ring Dichtung oder dergleichen vorgesehen.

Das Führungsrohr erstreckt sich zwischen einem ersten und einem zweiten Ende in einer Axialrichtung, wobei das erste Ende des Führungsrohrs dazu vorgesehen ist, auf den Schraubstutzen des Flüssigkeitsbehälters aufgesetzt zu werden. Zu diesem Zweck ist das Führungsrohr im Bereich des ersten Endes beispielsweise mit einem Innengewinde versehen. Eine Länge des Führungsrohrs in der Axialrichtung ist außerdem so bemessen, dass das zweite Ende eine Stirnseite des Schraubstutzens in Axialrichtung überragt. Das Führungsrohr ist also in Axialrichtung länger als der Schraubstutzen. In einem Zustand, in dem die Montagehilfevorrichtung das zwischen der Außenseite der Innenhülle und der Innenseite des Flüssigkeitsbehälters vorhandene Gas, insbesondere Luft, absaugt, befindet sich das Innenbauteil in einem Abschnitt des Führungsrohrs, der den Schraubstutzen in Axialrichtung überragt. Es ist ferner beispielsweise vorgesehen, dass das Innenbauteil in diesem Zustand vollständig in einem von dem Führungsrohr umschlossenen Bauraum angeordnet ist. So kann eine kompakte Montagehilfevorrichtung bereitgestellt werden.

Gemäß einer weiteren vorteilhaften Ausführungsform ist die Montagehilfevorrichtung dadurch fortgebildet, dass das Innenbauteil zwischen einer Absaugposition und einer Siegelposition (in Axialrichtung) verschiebbar in dem Führungsrohr geführt ist, wobei das Innenbauteil in der Absaugposition in einem Abschnitt des Führungsrohrs angeordnet ist, der in einem auf dem Schraubstutzen montierten Zustand des Führungsrohrs eine Stirnseite des Schraubstutzens in Axialrichtung überragt, und wobei das Innenbauteil in der Siegelposition an einer Position in dem Führungsrohr angeordnet ist, in der die Halterung des Innenbauteils den Adapter der Innenhülle mit dem Schraubstutzen, insbesondere einen Kragen des Adapters mit der Stirnseite des Schraubstutzens, in Kontakt bringt.

Es ist insbesondere vorgesehen, dass die Montagehilfevorrichtung eine Arretierung umfasst, mit der das Innenbauteil in der Absaugposition gegenüber dem Führungsrohr arretierbar ist.

Alternativ oder auch zusätzlich umfasst die Montagehilfevorrichtung einen Antrieb, beispielsweise einen elektromechanischen oder hydraulischen Antrieb, mit dem das Innenbauteil zwischen der Saugposition und der Siegelposition entlang der Axialrichtung des Führungsrohrs verschiebbar ist. In vielen Fällen ist ein solcher aktiver Antrieb nicht erforderlich. Durch das Absaugen des zwischen der Außenseite der Innenhülle und der Innenseite des Flüssigkeitsbehälters vorhandenen Gases entsteht in einem Bereich der Montagehilfevorrichtung, in dem das Ansaugende des Absaugkanals ausmündet, ein Unterdruck. Dies sorgt dafür, dass der Atmosphärendruck, welcher auf eine Oberseite des Innenbauteils wirkt, eine in Richtung des Schraubstutzens des Flüssigkeitsbehälters gerichtete äußere Kraft auf das Innenbauteil ausübt. Beim Lösen der Arretierung wird das Innenbauteil getrieben durch den atmosphärischen Druck entlang der Axialrichtung von der Absaugposition in die Siegelposition verlagert. In der Siegelposition ist der Kragen des Adapters der Innenhülle in Kontakt mit der Stirnseite des Schraubstutzens, so dass die Innenhülle gegenüber dem Flüssigkeitsbehälter abgedichtet ist.

Gemäß einer vorteilhaften Weiterbildung umfasst die Halterung des Innenbauteils der Montagehilfevorrichtung eine Heizeinrichtung, welche dazu eingerichtet ist, den Adapter der Innenhülle zumindest abschnittsweise zu erwärmen.

Die Heizeinrichtung ist beispielsweise ein Siegelband, welches sich zumindest abschnittsweise in Umfangsrichtung der Halterung erstreckt, insbesondere vollständig entlang des Umfangs der Halterung erstreckt, und dazu eingerichtet ist, den Kragen des Adapters der Innenhülle zu erwärmen. Die Heizeinrichtung, also das beispielsweise eingesetzte Siegelband, ist dazu eingerichtet, den Kragen des Adapters der Innenhülle so stark zu erwärmen, dass dieser teilweise aufschmilzt und sich mit der Stirnseite des Schraubstutzens des Flüssigkeitsbehälters stoffschlüssig verbindet. So kann die Innenhülle mit dem Flüssigkeitsbehälter dauerhaft verbunden/versiegelt werden.

Um die auf den Kragen des Adapters wirkende Kraft zu begrenzen und die Siegelwirkung zu homogenisieren, ist die Heizeinrichtung beispielsweise auf einem elastisch verformbaren Lager montiert. Beispielsweise ist zwischen dem Siegelband und dem Innenbauteil ein Band aus einem wärmebeständigen expandierten Material, beispielsweise aus Silikonschaum, vorgesehen.

Gemäß einer weiteren vorteilhaften Ausführungsform ist die Montagehilfevorrichtung dadurch fortgebildet, dass das Innenbauteil einen Zuluftkanal umfasst, der einen Luftzutritt aus einer Umgebung in einen von der Innenhülle umschlossenen Raum ermöglicht, wobei ein Filter vorhanden ist, der derart eingerichtet ist, dass aus der Umgebung in die Innenhülle einströmende Luft den Filter durchströmt.

Mithilfe einer Montagehilfevorrichtung, die einen Filter umfasst, ist es erstmalig möglich, einen Flüssigkeitsbehälter bereitzustellen, in dessen Innenraum eine Atmosphäre mit einer definierten Reinheit vorhanden ist. Der Reinheitsgrad kann über den Typ des eingesetzten Filters eingestellt werden. So können hohe Reinheitserfordernisse erfüllt werden, wie sie nicht einmal bei fabrikneuen Flüssigkeitsbehältern erreicht werden.

Gemäß einer weiteren vorteilhaften Ausführungsform ist die Montagehilfevorrichtung dadurch fortgebildet, dass das Innenbauteil ein hohlzylindrisches Bauteil ist, dessen äußere Mantelfläche zumindest abschnittsweise an einer Innenseite des Führungsrohrs anliegt, um das Innenbauteil in Axialrichtung verschiebbar in dem Führungsrohr zu führen, und wobei insbesondere das Innenbauteil eine Oberseite und eine gegenüberliegende Unterseite umfasst, wobei an der Oberseite der Absaugkanal ausmündet und an der Unterseite die Halterung als vorspringendes Bauteil mit verringertem Durchmesser herausragt, so dass das Innenbauteil an der Unterseite eine in Umfangsrichtung umlaufende Stufe ausbildet, und wobei ferner insbesondere der Absaugkanal in einem ringförmigen Bereich der an der Unterseite vorhandenen Stufe des Innenbauteils ausmündet, welcher sich zwischen der äußeren Mantelfläche und der Halterung erstreckt.

Die zuvor genannte Ausführungsform der Montagehilfevorrichtung hat sich in der Praxis als besonders geeignet herausgestellt. Es hat sich ferner als vorteilhaft herausgestellt, wenn die Montagehilfevorrichtung gemäß einer weiteren Ausführungsform auch die Unterdruckquelle, beispielsweise ein Radialverdichter oder dergleichen, umfasst. Auf diese Weise kann vorteilhaft ein vollständig autonomes System bereitgestellt werden, was nicht auf die Bereitstellung einer Unterdruckversorgung seitens einer externen Unterdruckquelle angewiesen ist.

Die Aufgabe wird ferner gelöst durch ein System, umfassend einen Flüssigkeitsbehälter, der einen Innenraum umschließt und eine Innenhülle, die zur Anordnung in dem Innenraum des Flüssigkeitsbehälters eingerichtet ist. Dieses System zeichnet sich gegenüber dem Stand der Technik durch eine Unterdruckquelle und eine Montagehilfevorrichtung aus, welche dazu eingerichtet sind, die Montage der Innenhülle in dem Innenraum des Flüssigkeitsbehälters zu unterstützen, wobei die Montagehilfevorrichtung umfasst: ein sich in einer Axialrichtung erstreckendes Führungsrohr, welches zur Befestigung an einem Schraubstutzen des Flüssigkeitsbehälters eingerichtet ist, und ein in einer Axialrichtung verschiebbar in dem Führungsrohr geführtes Innenbauteil, wobei das Innenbauteil eine Halterung umfasst, die dazu eingerichtet ist, einen eine Öffnung der Innenhülle umgebenden Adapter der Innenhülle, der im montierten Zustand der Innenhülle dazu eingerichtet ist, an dem Schraubstutzen befestigt zu werden, lösbar zu halten, und wobei das Innenbauteil zumindest einen Absaugkanal aufweist, der sich zwischen einem Förderende und einem Ansaugende erstreckt, wobei das Förderende fluidisch mit der Unterdruckquelle kommuniziert und das Ansaugende in einem Abschnitt des Innenbauteils ausmündet, der in einer Radialrichtung zwischen einer Innenseite des Führungsrohrs und der Halterung liegt, so dass durch den Absaugkanal zwischen einer Außenseite der Innenhülle und einer Innenseite des Flüssigkeitsbehälters vorhandenes Gas mit der Unterdruckquelle absaugbar ist.

Auf das System treffen gleiche oder ähnliche Vorteile zu, wie sie bereits im Hinblick auf die Montagehilfevorrichtung erwähnt wurden. Auf Wiederholungen soll aus diesem Grund verzichtet werden. Die im Hinblick auf die Montagehilfevorrichtung erwähnten vorteilhaften Weiterbildungen sind in gleicher Weise auf das System anwendbar.

Vorteilhaft ist das System dadurch fortgebildet, dass das Führungsrohr zur fluiddichten Befestigung auf dem Schraubstutzen eingerichtet ist und zwischen dem Innenbauteil und dem Führungsrohr eine Dichtung vorhanden ist, welche das Innenbauteil gegenüber dem Führungsrohr fluiddicht abdichtet.

Ferner ist das System insbesondere dadurch fortgebildet, dass das Innenbauteil zwischen einer Absaugposition und einer Siegelposition verschiebbar in dem Führungsrohr geführt ist, und wobei das Innenbauteil in der Absaugposition in einem Abschnitt des Führungsrohrs angeordnet ist, der in einem auf dem Schraubstutzen montierten Zustand des Führungsrohrs eine Stirnseite des Schraubstutzens in Axialrichtung überragt, und wobei das Innenbauteil in der Siegelposition an einer Position in dem Führungsrohr angeordnet ist, in der die Halterung des Innenbauteils den Adapter der Innenhülle mit dem Schraubstutzen, insbesondere einen Kragen des Adapters mit der Stirnseite des Schraubstutzens, in Kontakt bringt.

So umfasst gemäß einer weiteren Ausführungsform das System eine Montagehilfevorrichtung, welche dadurch fortgebildet ist, dass diese eine Arretierung umfasst, mit der das Innenbauteil in der Absaugposition gegenüber dem Führungsrohr arretierbar ist.

Gemäß einer weiteren Ausführungsform ist vorgesehen, dass die Halterung des Innenbauteils eine Heizeinrichtung umfasst, welche dazu eingerichtet ist, den Adapter der Innenhülle zumindest abschnittsweise zu erwärmen, so dass der Adapter mit dem Schraubstutzen verbindbar, insbesondere verschweißbar, ist, so dass in der Siegelposition der Adapter mit dem Schraubstutzen verbindbar ist, die Heizeinrichtung dazu eingerichtet ist, einen von dem Adapter der Innenhülle umfassten Kragen zu erwärmen und mit einer Stirnseite des Schraubstutzens zu verbinden, wobei die Heizeinrichtung insbesondere als ein sich zumindest abschnittsweise in Umfangsrichtung erstreckendes Siegelband ausgeführt ist, und wobei die Heizeinrichtung auf einem in Axialrichtung elastisch verformbaren Lager montiert ist, wobei insbesondere zwischen dem Siegelband und dem Innenbauteil ein Lager aus einem wärmebeständigen expandierten Material, ferner insbesondere Silikonschaum, vorhanden ist.

Gemäß einer weiteren Ausführungsform ist vorgesehen, dass der Flüssigkeitsbehälter, insbesondere der Schraubstutzen des Flüssigkeitsbehälters, aus einem Material mit höherem Schmelzpunkt hergestellt ist als die Innenhülle, insbesondere der Adapter, ferner insbesondere ein/der Kragen des Adapters der Innenhülle.

Vorteilhaft erlaubt eine solche Ausgestaltung des Systems, dass der Kragen des Adapters der Innenhülle, nicht aber das Material des Schraubstutzens, beim Versiegeln der Innenhülle auf der Stirnseite des Schraubstutzens aufschmilzt. Beim späteren Entfernen der Innenhülle aus dem Innenraum des Flüssigkeitsbehälters kann die Innenhülle im Bereich des Kragens ihres Adapters, beispielsweise durch einen entlang des Umfangs des Schraubstutzens geführten Schnitt, von dem Flüssigkeitsbehälter getrennt werden. Der verbleibende Teil des Kragens des Adapters der Innenhülle kann anschließend von der Stirnseite des Schraubstutzens entfernt werden, beispielsweise abgeschnitten oder abgeschält werden. So kann für die darauffolgende Verwendung ein Flüssigkeitsbehälter bereitgestellt werden, welcher im Bereich der Stirnseite seines Schraubstutzens eine nahezu planebene Fläche aufweist, so dass ein Kragen eines Adapters einer neuen Innenhülle zuverlässig und effizient mit der Stirnseite verbunden werden kann.

Gemäß einer weiteren vorteilhaften Ausführungsform ist das Verfahren dadurch fortgebildet, dass das Innenbauteil einen Zuluftkanal umfasst, der einen Luftzutritt aus einer Umgebung in einen von der Innenhülle umschlossenen Raum ermöglicht, wobei die Montagehilfevorrichtung einen Filter umfasst, der derart eingerichtet ist, dass aus der Umgebung in die Innenhülle einströmende Luft den Filter durchströmt.

Gemäß einer weiteren vorteilhaften Ausführungsform ist das System dadurch fortgebildet, dass das Innenbauteil ein hohlzylindrisches Bauteil ist, dessen äußere Mantelfläche zumindest abschnittsweise an einer Innenseite des Führungsrohrs anliegt, um das Innenbauteil in Axialrichtung verschiebbar in dem Führungsrohr zu führen und wobei insbesondere das Innenbauteil eine Oberseite und eine gegenüberliegende Unterseite umfasst, wobei an der Oberseite der Absaugkanal ausmündet und an der Unterseite die Halterung als vorspringendes Bauteil mit verringertem Durchmesser herausragt, so dass das Innenbauteil an der Unterseite eine in Umfangsrichtung umlaufende Stufe ausbildet, und wobei ferner insbesondere der Absaugkanal in einem ringförmigen Bereich der an der Unterseite vorhandenen Stufe des Innenbauteils ausmündet, welcher sich zwischen der äußeren Mantelfläche und der Halterung erstreckt.

Die Aufgabe wird ferner gelöst durch ein Verfahren zum Anordnen einer Innenhülle mit einem Adapter, der eine Öffnung der Innenhülle umgibt, in einem Flüssigkeitsbehälter, der einen Innenraum umschließt und einen Schraubstutzen umfasst, der eine Öffnung des Flüssigkeitsbehälters umgibt, umfassend die folgenden Schritte:
Anordnen der Innenhülle in dem Innenraum des Flüssigkeitsbehälters derart, dass sich der Adapter der Innenhülle von dem Innenraum durch den Schraubstutzen in eine nicht von dem Flüssigkeitsbehälter umschlossene Umgebung erstreckt.

Das Verfahren zeichnet sich gegenüber dem Stand der Technik durch die folgenden Schritte aus:
Aufsetzen einer Montagehilfevorrichtung nach einem oder mehreren der zuvor genannten Ausführungsformen auf den Schraubstutzen, wobei das Führungsrohr auf den Schraubstutzen aufgesetzt, der Adapter der Innenhülle mit der Halterung des Innenbauteils verbunden wird, und
Absaugen eines zwischen einer Außenseite der Innenhülle und einer Innenseite des Flüssigkeitsbehälters vorhandenen Gases mit der Unterdruckquelle.

Auch auf das Verfahren zum Anordnen der Innenhülle in einem Innenraum des Flüssigkeitsbehälters treffen vorteilhaft die zuvor im Hinblick auf die Montagehilfevorrichtung und das System erwähnten Vorteile und Weiterbildungsmöglichkeiten zu.

Das Verfahren ist vorteilhaft dadurch fortgebildet, dass eine Montagehilfevorrichtung auf den Schraubstutzen aufgesetzt wird, welche eine Arretierung umfasst, mit der das Innenbauteil in der Absaugposition gegenüber dem Führungsrohr arretierbar ist. Nach Erreichen eines vorgegebenen Unterdrucks in dem Absaugkanal wird diese Arretierung gelöst, wodurch das Innenbauteil durch den atmosphärischen Druck von der Absaugposition in die Siegelposition verschoben wird. Ebenso wie bereits im Zusammenhang mit der Montagehilfevorrichtung erwähnt, kann auch vorgesehen sein, dass zu diesem Zweck eine Betätigungsvorrichtung vorhanden ist, mit der das Innenbauteil der Montagehilfevorrichtung zwischen der Absaugposition und der Siegelposition verschoben wird.

Das Verfahren ist ferner vorteilhaft dadurch fortgebildet, dass eine Montagehilfevorrichtung aufgesetzt wird, bei welcher die Halterung des Innenbauteils eine Heizeinrichtung umfasst, welche dazu eingerichtet ist, den Adapter der Innenhülle zumindest abschnittsweise zu erwärmen. Nach dem Erreichen der Siegelposition wird die Heizeinrichtung aktiviert und der Adapter der Innenhülle wird mit dem Schraubstutzen verbunden, insbesondere wird ein Kragen des Adapters mit einer Stirnseite des Schraubstutzens verbunden.

Schließlich wird die Aufgabe gelöst durch die Verwendung einer Montagehilfevorrichtung nach einem oder mehreren der zuvor genannten Ausführungsformen zum Anordnen der Innenhülle in dem Innenraum des Flüssigkeitsbehälters, wobei der Flüssigkeitsbehälter insbesondere ein Teil eines IBC ist.

Auch auf die Verwendung treffen gleiche oder ähnliche Vorteile zu, wie sie bereits zuvor im Hinblick auf die Montagehilfevorrichtung, das System und das Verfahren erwähnt wurden. Dies betrifft ebenso vorteilhafte Weiterbildungen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen. Im Rahmen der Erfindung sind Merkmale, die mit "insbesondere" oder "vorzugsweise" gekennzeichnet sind, als fakultative Merkmale zu verstehen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematisch vereinfachte Querschnittsansicht einer Montagehilfevorrichtung, deren Innenbauteil sich in der Absaugposition befindet,
- Fig. 2: eine schematisch vereinfachte Detailansicht des in Fig. 1 gezeigten Querschnitts,
- Fig. 3: eine weitere schematisch vereinfachte Querschnittsansicht der aus Fig. 1 bekannten Montagehilfevorrichtung, wobei sich das Innenbauteil in der Siegelposition befindet,
- Fig. 4: eine schematisch vereinfachte Seitenansicht eines IBC als Teil eines Systems, welches den Flüssigkeitsbehälter des IBC, die auf diesem montierte Montagehilfevorrichtung, eine Innenhülle und eine Unterdruckquelle umfasst,
- Fig. 5: eine schematisch vereinfachte Frontalansicht auf dieses System, wobei aus Gründen der Übersichtlichkeit die Unterdruckquelle nicht dargestellt ist und
- Fig. 6: eine schematisch vereinfachte Draufsicht auf den IBC mit montierter Montagehilfevorrichtung, wobei wiederum die Unterdruckquelle nicht dargestellt ist.

In den Zeichnungen sind jeweils gleiche oder gleichartige Elemente und/oder Teile mit denselben Bezugsziffern versehen, so dass von einer erneuten Vorstellung jeweils abgesehen wird.

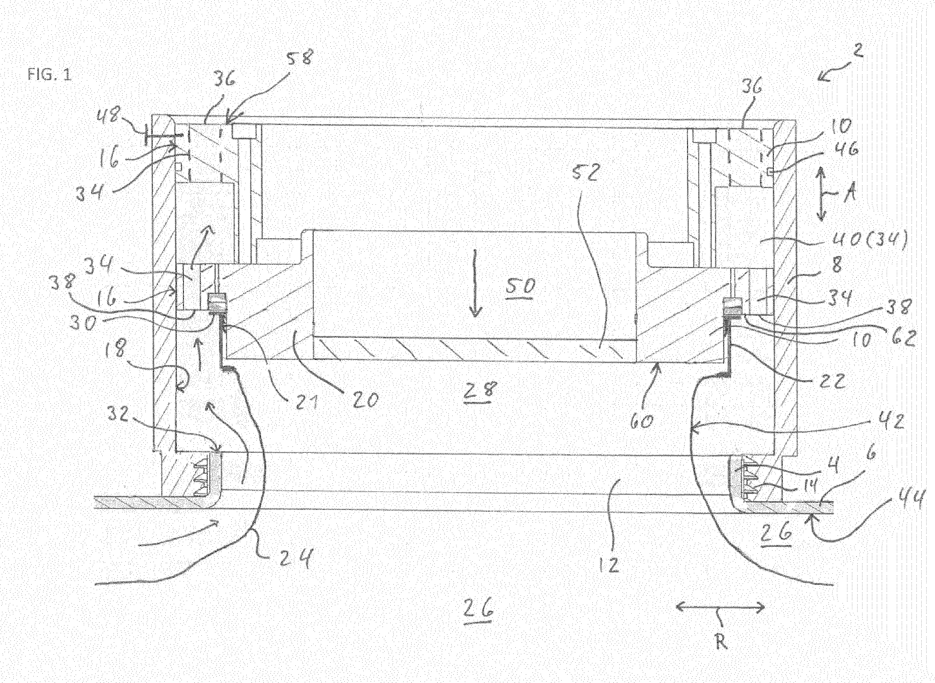

Fig. 1 zeigt in einer schematisch vereinfachten Querschnittsansicht eine Montagehilfevorrichtung 2, welche auf einen Schraubstutzen 4 eines Flüssigkeitsbehälters 6 aufgesetzt ist. Der Flüssigkeitsbehälter 6 ist beispielsweise ein Teil eines IBC (Intermediate Bulk Container). Die Montagehilfevorrichtung 2 umfasst ein Führungsrohr 8, welches sich in einer Axialrichtung A erstreckt. In einem von dem Führungsrohr 8 umschlossenen Bauraum befindet sich ein Innenbauteil 10, welches in dem Führungsrohr 8 in der Axialrichtung A verschiebbar geführt ist. Der Schraubstutzen 4 umgibt eine Öffnung 12, durch die der Flüssigkeitsbehälter 6 befüllt und ggf. auch entleert werden kann. Das Führungsrohr 8 weist an seinem unteren oder ersten Ende ein Innengewinde 14 auf, mit dem das Führungsrohr 8 auf ein Außengewinde des Schraubstutzens 4 aufschraubbar ist, so dass das Führungsrohr 8 an dem Flüssigkeitsbehälter 6 befestigt werden kann. Die Verschraubung zwischen dem Schraubstutzen 4 und dem Führungsrohr 8 ist so ausgeführt, dass das Führungsrohr 8 fluiddicht, insbesondere luftdicht, mit dem Schraubstutzen 4 verbunden werden kann. Zu diesem Zweck ist, sofern erforderlich, eine in der Zeichnung nicht dargestellte Dichtung vorhanden. Das Führungsrohr 8 ist beispielsweise als hohlzylindrisches Bauteil ausgeführt und ferner beispielsweise aus Polyethylen (PE) hergestellt. Auch das Innenbauteil 10 kann aus Polyethylen hergestellt sein.

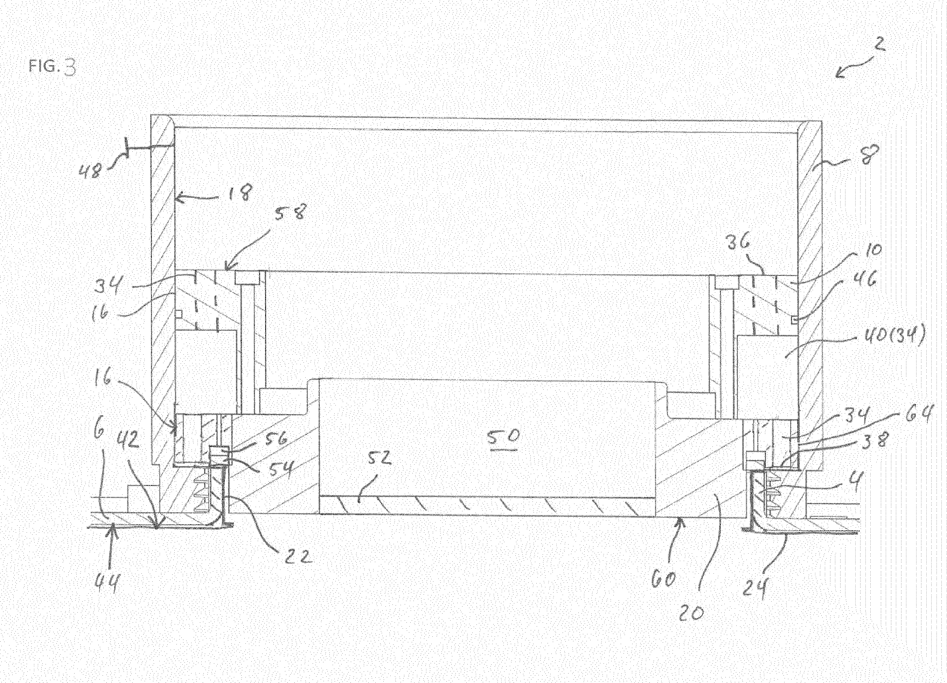

Das Innenbauteil 10 ist in der Axialrichtung A verschiebbar in dem Führungsrohr 8 gelagert, in dem äußere Führungsflächen 16 des Innenbauteils 10, welche die Form von Zylindermantelflächen haben, auf einer Innenseite 18 des Führungsrohrs 8 abgleiten. So ist das Innenbauteil 10 zwischen der in Fig. 1 gezeigten Absaugposition und einer in Fig. 3 gezeigten Siegelposition, welche später detaillierter beschrieben wird, verschiebbar.

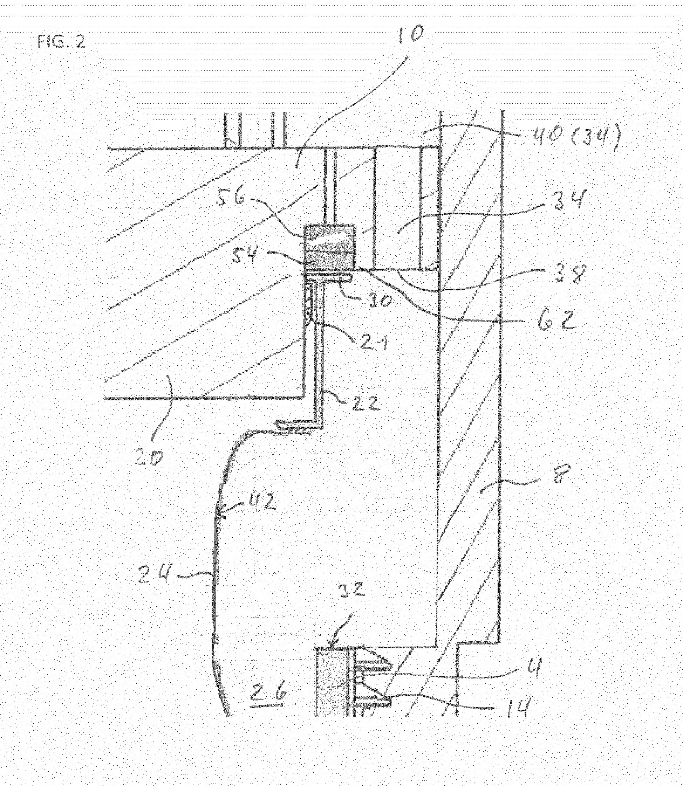

Das Innenbauteil 10 umfasst eine Halterung 20, die dazu eingerichtet ist, einen Adapter 22 einer Innenhülle 24 zu halten. Die Halterung 20 umfasst eine oder mehrere Rastnasen 21, welche im Zusammenhang mit Fig. 2 detaillierter beschrieben werden. Als Halterung 20 soll der gesamte untere Bereich des Innenbauteils 10 angesehen werden, nämlich derjenige Bereich des Innenbauteils 10, welcher einen gegenüber dem übrigen Teil des Innenbauteils 10 reduzierten Durchmesser aufweist und aus einer Unterseite 60 des Innenbauteils 10 herausragt.

Die Innenhülle 24 ist dazu eingerichtet, in einem Innenraum 26 des Flüssigkeitsbehälters 6 angeordnet zu werden. Die Innenhülle 24 umfasst eine Öffnung 28, die von dem Adapter 22 umgeben ist. Im montierten Zustand ist der Adapter 22 der Innenhülle 24 an dem Schraubstutzen 4 befestigt. Hierzu wird ein Kragen 30 des Adapters 22 der Innenhülle 24 mit einer Stirnseite 32 des Schraubstutzens 4 verschweißt.

Das Innenbauteil 10 umfasst zumindest einen Absaugkanal 34, bevorzugt mehrere Absaugkanäle 34, der/die sich zwischen einem Förderende 36 und einem Ansaugende 38 erstreckt/erstrecken. Lediglich aus Gründen der besseren Lesbarkeit wird im Folgenden ein Absaugkanal 34 beschrieben. Der Absaugkanal 34 durchsetzt das Innenbauteil 10 und mündet zunächst in eine Verteilerkammer 40, welche ebenfalls als ein Teil des Absaugkanals 34 angesehen wird. Ausgehend von der Verteilerkammer 40 setzt sich der Absaugkanal 34 mit erweitertem Querschnitt fort. In der in Fig. 1 dargestellten Querschnittsansicht ist dieser Teil des Absaugkanals 34 nicht sichtbar und deshalb mit gestrichelter Linie dargestellt. Der Absaugkanal 34 endet an einem Förderende 36, welches an einer Oberseite 58 des Innenbauteils 10 ausmündet.

Die Absaugkanäle 34 sind so dimensioniert, dass die Summe ihrer Querschnitte (bezogen auf die in die Ansaugenden 38 ausmündenden Abschnitte mit geringerem Querschnitt und die in die Förderenden 36 ausmündenden Abschnitte mit größerem Querschnitt) stets konstant bleibt. So kann die Strömungsgeschwindigkeit innerhalb der Absaugkanäle 34 während des Absaugvorgang konstant gehalten werden. Durch die Querschnittserweiterung können weniger Absaugkanäle 34 vorgesehen werden, welche an den Förderenden 36 ausmünden. An den Förderenden 36 sind die Absaugkanäle 34 fluidisch mit einer Unterdruckquelle koppelbar und weisen hierzu beispielsweise geeignete Anschlüsse auf. Die Ansaugenden 38 der Absaugkanäle 34 münden in einem Abschnitt des Innenbauteils 10 aus, der in einer Radialrichtung R zwischen der Innenseite 18 des Führungsrohrs 8 und der Halterung 20 liegt, mit der der Adapter 22 der Innenhülle 24 gehalten wird. So ist es möglich, über den zumindest einen Absaugkanal 34 zwischen einer Außenseite 42 der Innenhülle 24 und einer Innenseite 44 des Flüssigkeitsbehälters 6 vorhandenes Gas, insbesondere Luft, mit der Unterdruckquelle abzusaugen.

Das Innenbauteil 10 ist gegenüber dem Führungsrohr 8 ebenso wie gegenüber dem Schraubstutzen 4 fluiddicht abgedichtet. Zu diesem Zweck kann beispielsweise eine O-Ring förmige Dichtung in einer Nut 46 angeordnet sein. Alternativ oder zusätzlich ist eine Dichtlippe an der Oberseite 58 des Innenbauteils 10 vorgesehen, welche sich an die Innenwand 18 des Führungsrohrs 8 anlegt.

Das Innenbauteil 10 ist mittels einer Arretierung 48, welche in Fig. 1 lediglich stark vereinfacht und schematisch dargestellt ist, in der in dieser Figur gezeigten Absaugposition gegenüber dem Führungsrohr 8 arretiert. Je mehr Gas aus dem Zwischenraum zwischen der Außenseite 42 der Innenhülle 24 und der Innenseite 44 des Flüssigkeitsbehälters 6 abgepumpt wird, desto weiter legt sich die Innenhülle 24 an die Innenseite 44 des Flüssigkeitsbehälters 6 an. Dieser Vorgang geht soweit, bis in dem Absaugkanal 34 ein Unterdruck messbar ist, welcher zumindest annähernd der Unterdruckleistung der Unterdruckquelle entspricht. In diesem Zustand wirkt der atmosphärische Umgebungsdruck auf die Oberseite 58 des Innenbauteils 10. Sobald die Arretierung 48 gelöst wird, verlagert der Atmosphärendruck das Innenbauteil 10 von der in Fig. 1 gezeigten Absaugposition in die in Fig. 3 gezeigte Siegelposition.

Während des Abpumpvorgangs strömt, wie mit einem Pfeil angedeutet, Umgebungsluft durch einen zentral in dem Innenbauteil 10 vorhandenen Zuluftkanal 50 in den Innenraum 26 der Innenhülle 24. Um in dem Innenraum 26 eine Atmosphäre mit definierten Eigenschaften bereitzustellen, kann in dem Zuluftkanal 50 ein Filter 52 vorhanden sein, den die mit dem Pfeil angedeutete einströmende Luft durchströmt. Der Reinheitsgrad der Atmosphäre kann durch geeignete Wahl des Filters 52 eingestellt werden.

Fig. 2 zeigt eine schematisch vereinfachte Detailansicht des in Fig. 1 gezeigten Querschnitts. Im Detail dargestellt ist die Halterung 20, welche an dem Innenbauteil 10 vorhanden ist und den Adapter 22 der Innenhülle 24 aufnimmt. Die Halterung 20 umfasst beispielsweise eine oder mehrere Rastnasen 21, die auch in Umfangsrichtung der Halterung 20 geschlossen ausgeführt sein können, also eine umlaufende Rastnase 21 oder dergleichen bilden.

Der Adapter 22 umfasst in einem endständigen Bereich den Kragen 30, welcher sich soweit nach innen erstreckt, dass er von der Rastnase 21 gehalten werden kann. Oberhalb des Kragens 30 des Adapters 22 ist in das Innenbauteil 10 eine Heizeinrichtung 54 integriert. Bei der Heizeinrichtung 54 handelt es sich beispielsweise um ein Siegelband oder eine andere geeignete Heizeinrichtung, welche dazu eingerichtet ist, den Adapter 22 im Bereich seines Kragens 30 soweit zu erwärmen, dass dieser zumindest soweit aufschmilzt, dass der Adapter 22 der Innenhülle 24 im Bereich des Kragens 30 mit der Stirnseite 32 des Schraubstutzens 4 verbunden werden kann. Um einen gleichmäßigen Anpressdruck auf die Stirnseite 32 bzw. die Verbindung zwischen dieser und dem Kragen 30 des Adapters 22 zu gewährleisten, ist gemäß dem dargestellten Ausführungsbeispiel die Heizeinrichtung 54 auf einem elastischen Element 56 gelagert. Bei dem elastischen Element 56 handelt es sich beispielsweise um ein Band aus einem wärmebeständigen expandierten Material, beispielsweise um ein Band aus Silikonschaum.

Fig. 3 zeigt in einer weiteren schematisch vereinfachten Querschnittsansicht die Montagehilfevorrichtung 2 in der Siegelposition. Der Kragen 30 des Adapters 22 der Innenhülle 24 liegt auf der Stirnseite 32 des Schraubstutzens 4 auf und die Außenseite 42 der Innenhülle 24 liegt an der Innenseite 44 des Flüssigkeitsbehälters 6 an. Nun kann die Heizeinrichtung 54 aktiviert werden, so dass sich der Kragen 30 mit der Stirnseite 32 des Schraubstutzens 4 verbindet. Es ist beispielsweise vorgesehen, dass für den Adapter 22 der Innenhülle 24 ein Material gewählt wird, welches einen zumindest geringfügig geringeren Schmelzpunkt als das Material hat, aus welchem der Flüssigkeitsbehälter 6, insbesondere der Schraubstutzen 4 des Flüssigkeitsbehälters 6, hergestellt ist. So ist sichergestellt, dass die stoffflüssige Verbindung zwischen der Innenhülle 24 und dem Flüssigkeitsbehälter 6 durch Aufschmelzen des Adapters 22, genauer seines Kragens 30, erfolgt, und nicht durch ein Aufschmelzen des Materials des Flüssigkeitsbehälters 6. Beim späteren Entfernen der Innenhülle 24 aus dem Flüssigkeitsbehälter 6 kann die Innenhülle 24 beispielsweise im Bereich ihres Adapters 22 aufgeschnitten werden, mit anderen Worten also der aufgeschmolzene Teil des Kragens 30 des Adapters 22 von der Stirnseite 32 des Schraubstutzens 4 entfernt, beispielsweise abgeschält, werden. Der Flüssigkeitsbehälter 6 ist nun soweit vorbereitet, so dass eine neue Innenhülle 24 eingesetzt werden kann.

Das Innenbauteil 10 der Montagehilfevorrichtung ist vorzugsweise als hohlzylindrisches Bauteil ausgeführt, dessen äußere Mantelfläche zumindest abschnittsweise an der Innenseite 18 des Führungsrohrs 8 anliegt und die äußeren Führungsflächen 16 bereitstellt. So kann das Innenbauteil 10 in Axialrichtung A verschiebbar in dem Führungsrohr 8 geführt werden. Das Innenbauteil 10 weist eine Oberseite 58 und eine gegenüberliegende, bevorzugt planparallel ausgerichtete Unterseite 60 auf. An der Oberseite 58 mündet der zumindest eine Absaugkanal 34 mit seinem Förderende 36 aus. An der Unterseite 60 ist die Halterung 20 als vorspringendes Bauteil mit verringertem Durchmesser ausgestaltet. Das Innenbauteil 10 bildet an seiner Unterseite 60 also eine in Umfangsrichtung umlaufende Stufe 62 aus. Der Absaugkanal 34 mündet in diesem ringförmigen Bereich an der Unterseite 60 des Innenbauteils 10, also im Bereich der dort vorhandenen Stufe 62, aus. Dieser ringförmige Bereich der Stufe erstreckt sich zwischen der äußeren Mantelfläche 64 des Innenbauteils 10 und der Halterung 20 des Innenbauteils 10.

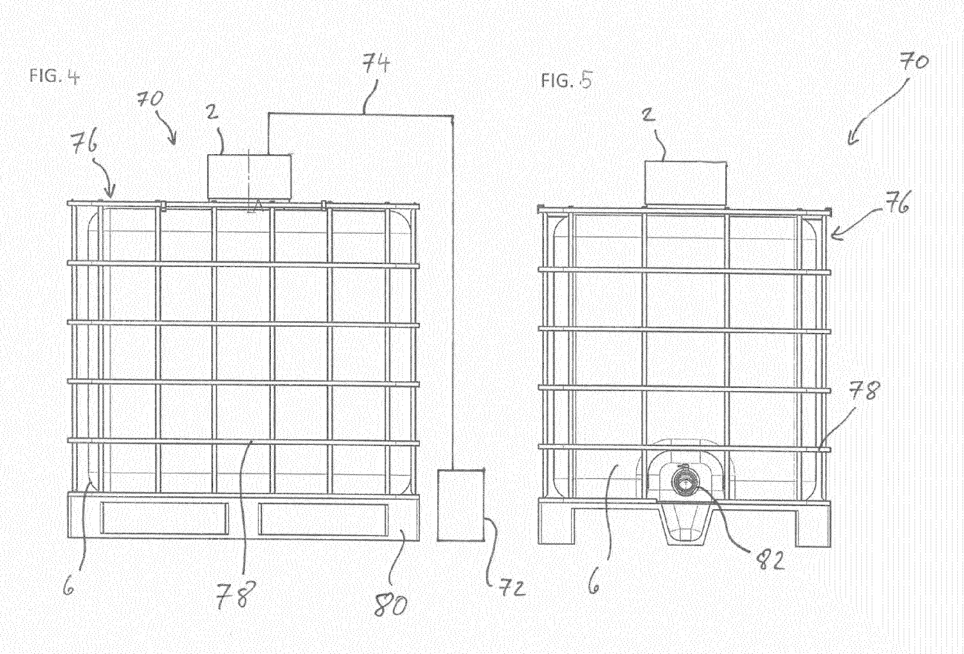

Fig. 4 zeigt in einer schematisch vereinfachten Seitenansicht ein System 70, welches einen Flüssigkeitsbehälter 6, eine Montagehilfevorrichtung 2, eine in dieser Darstellung nicht sichtbare Innenhülle 24 und eine Unterdruckquelle 72 umfasst. Bei der Unterdruckquelle 72 handelt es sich beispielsweise um einen Radialverdichter mit hoher Volumenleistung. Dieser ist über eine Unterdruckleitung 74 mit der Montagehilfevorrichtung 2 verbunden. Der Flüssigkeitsbehälter 6 ist Teil eines IBC 76, der neben dem eigentlichen Flüssigkeitsbehälter 6 noch einen Gitterkäfig 78, in dem der Flüssigkeitsbehälter 6 angeordnet ist, und eine Palette 80 umfasst. Die Palette 80 dient dem einfachen Transport des IBC 76, beispielsweise mithilfe eines Flurförderzeugs.

Fig. 5 zeigt eine schematisch vereinfachte Frontalansicht dieses Systems 70, wobei aus Gründen der Vereinfachung der Zeichnung die Unterdruckquelle 72 und die Unterdruckleitung 74 nicht dargestellt sind. Der Flüssigkeitsbehälter 6 weist in einem unteren Bereich einen Auslaufstutzen 82 auf, über den der Flüssigkeitsbehälter 6 bevorzugt entleert wird. Über diesen Auslaufstutzen 82 wird die Innenhülle 24 beispielsweise in den Flüssigkeitsbehälter 6 eingebracht. Sie wird im Bereich des Auslaufstutzens 82 ferner beispielsweise mithilfe einer O-Ring Dichtung fluiddicht verschraubt. Anschließend wird der Adapter 22 der Innenhülle 24 durch die obere Öffnung 28 des Flüssigkeitsbehälters 6 gezogen und mit der Halterung 20 verbunden. Zuvor wird die Montagehilfevorrichtung 2 teilweise, nämlich in Form des Führungsrohrs 8, auf den Schraubstutzen 4 aufgesetzt. Anschließend wird, wie bereits im Zusammenhang mit den Figuren 1 bis 3 beschrieben, das zwischen einer Außenseite 42 der Innenhülle 24 und der Innenseite 44 des Flüssigkeitsbehälters 6 vorhandene Gas, insbesondere Luft, mithilfe der Unterdruckquelle 72 abgesaugt, so dass anschließend die Innenhülle 24 glatt an der Innenseite 44 des Flüssigkeitsbehälters 6 anliegt. Anschließend wird der Adapter 22 der Innenhülle auf den Schraubstutzen 4 aufgesiegelt, so dass ein zur Befüllung fertiger IBC 76 bereitsteht.

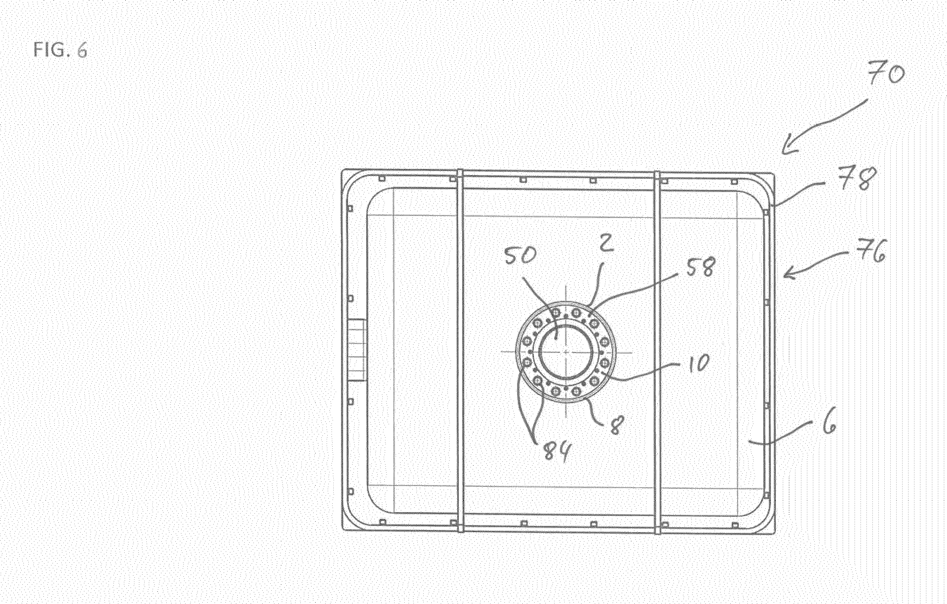

Fig. 6 zeigt in schematisch vereinfachter Draufsicht den IBC 76 mit aufgesetzter Montagehilfevorrichtung 2. Auf der Oberseite 58 des sichtbaren Innenteils sind Anschlüsse 84, von denen aus Gründen der Übersichtlichkeit lediglich einige mit Bezugszeichen versehen sind, zum Anschluss der Unterdruckquelle 72 bzw. der Unterdruckleitung 74 an den Absaugkanal 34 im Bereich seines Förderendes 36 sichtbar.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 2: Montagehilfevorrichtung
- 4: Schraubstutzen
- 6: Flüssigkeitsbehälter
- 8: Führungsrohr
- 10: Innenbauteil
- 12: Öffnung
- 14: Innengewinde
- 16: äußere Führungsflächen
- 18: Innenseite
- 20: Halterung
- 21: Rastnase
- 22: Adapter
- 24: Innenhülle
- 26: Innenraum
- 28: Öffnung
- 30: Kragen
- 32: Stirnseite
- 34: Absaugkanal
- 36: Förderende
- 38: Ansaugende
- 40: Verteilerkammer
- 42: Außenseite
- 44: Innenseite
- 46: Nut
- 48: Arretierung
- 50: Zuluftkanal
- 52: Filter
- 54: Heizeinrichtung
- 56: elastisches Element
- 58: Oberseite
- 60: Unterseite
- 62: Stufe
- 64: äußere Mantelfläche
- 70: System
- 72: Unterdruckquelle
- 74: Unterdruckleitung
- 76: IBC
- 78: Gitterkäfig
- 80: Palette
- 82: Auslaufstutzen
- 84: Anschluss

- A: Axialrichtung
- R: Radialrichtung

## Patentansprüche

1. Montagehilfevorrichtung (2), welche dazu eingerichtet ist, die Montage einer Innenhülle (24) in einem Innenraum (26) eines Flüssigkeitsbehälters (6) zu unterstützen, umfassend ein sich in einer Axialrichtung (A) erstreckendes Führungsrohr (8), welches zur Befestigung an einem eine Öffnung (12) umgebenden Schraubstutzen (4) des Flüssigkeitsbehälters (6) eingerichtet ist, ein in der Axialrichtung (A) verschiebbar in dem Führungsrohr (8) geführtes Innenbauteil (10), wobei das Innenbauteil (10) eine Halterung (20) umfasst, die dazu eingerichtet ist, einen eine Öffnung (28) der Innenhülle (24) umgebenden Adapter (22) der Innenhülle (24), der im montierten Zustand der Innenhülle (24) dazu eingerichtet ist, an dem Schraubstutzen (4) befestigt zu werden, lösbar zu halten, und wobei das Innenbauteil (10) zumindest einen Absaugkanal (34) aufweist, der sich zwischen einem Förderende (36) und einem Ansaugende (38) erstreckt, wobei das Förderende (36) fluidisch mit einer Unterdruckquelle koppelbar ist und das Ansaugende (38) in einem Abschnitt aus dem Innenbauteil (10) ausmündet, der in einer Radialrichtung (R) zwischen einer Innenseite (18) des Führungsrohrs (8) und der Halterung (20) liegt, so dass durch den Absaugkanal (34) zwischen einer Außenseite (42) der Innenhülle (24) und einer Innenseite (44) des Flüssigkeitsbehälters (6) vorhandenes Gas mit der Unterdruckquelle absaugbar ist.

2. Montagehilfevorrichtung (2) nach Anspruch 1, wobei das Führungsrohr (8) zur fluiddichten Befestigung auf dem Schraubstutzen (4) eingerichtet ist und zwischen dem Innenbauteil (10) und dem Führungsrohr (8) eine Dichtung vorhanden ist, welche das Innenbauteil (10) gegenüber dem Führungsrohr (8) fluiddicht abdichtet.

3. Montagehilfevorrichtung (2) nach Anspruch 1 oder 2, wobei das Innenbauteil (10) zwischen einer Absaugposition und einer Siegelposition verschiebbar in der Führungshülse (8) geführt ist, und wobei das Innenbauteil (10) in der Absaugposition in einem Abschnitt des Führungsrohrs (8) angeordnet ist, der in einem auf dem Schraubstutzen (4) montierten Zustand des Führungsrohrs (8) eine Stirnseite (32) des Schraubstutzens (4) in Axialrichtung (A) überragt, und wobei das Innenbauteil (10) in der Siegelposition an einer Position in dem Führungsrohr (8) angeordnet ist, in der die Halterung (20) des Innenbauteils (10) den Adapter (22) der Innenhülle (24) mit dem Schraubstutzen (4), insbesondere einen Kragen (30) des Adapters (22) mit der Stirnseite (32) des Schraubstutzens (4), in Kontakt bringt, insbesondere ferner umfassend eine Arretierung (48), mit der das Innenbauteil (10) in der Absaugposition gegenüber dem Führungsrohr (8) arretierbar ist.

4. Montagehilfevorrichtung (2) nach einem der vorhergehenden Ansprüche, wobei die Halterung (20) des Innenbauteils (10) eine Heizeinrichtung (54) umfasst, welche dazu eingerichtet ist, den Adapter (22) der Innenhülle (24) zumindest abschnittsweise zu erwärmen.

5. Montagehilfevorrichtung (2) nach einem der vorhergehenden Ansprüche, wobei das Innenbauteil (10) einen Zuluftkanal (50) umfasst, der einen Luftzutritt aus einer Umgebung in einen von der Innenhülle (24) umschlossenen Raum ermöglicht, wobei ein Filter (52) vorhanden ist, der derart eingerichtet ist, dass aus der Umgebung in die Innenhülle (24) einströmende Luft den Filter (52) durchströmt.

6. Montagehilfevorrichtung (2) nach einem der vorhergehenden Ansprüche, wobei das Innenbauteil (10) ein hohlzylindrisches Bauteil ist, dessen äußere Mantelfläche (64) zumindest abschnittsweise an einer Innenseite (18) des Führungsrohrs (8) anliegt, um das Innenbauteil (10) in Axialrichtung (A) verschiebbar in dem Führungsrohr (8) zu führen, und wobei insbesondere das Innenbauteil (10) eine Oberseite (58) und eine gegenüberliegende Unterseite (60) umfasst, wobei an der Oberseite (58) der Absaugkanal (34) ausmündet und an der Unterseite (60) die Halterung (20) als vorspringendes Bauteil mit verringertem Durchmesser herausragt, so dass das Innenbauteil (10) an der Unterseite (60) eine in Umfangsrichtung umlaufende Stufe (62) ausbildet, und wobei ferner insbesondere der Absaugkanal (34) in einem ringförmigen Bereich der an der Unterseite (60) vorhandenen Stufe (62) des Innenbauteils (10) ausmündet, welcher sich zwischen der äußeren Mantelfläche (64) und der Halterung (20) erstreckt.

7. System (70), umfassend einen Flüssigkeitsbehälter (6), der einen Innenraum (26) umschließt, eine Innenhülle (24), die zur Anordnung in dem Innenraum (26) des Flüssigkeitsbehälters (6) eingerichtet ist, eine Unterdruckquelle (72) und eine Montagehilfevorrichtung (2) nach Anspruch 1, bei der das Förderende (36) fluidisch mit der Unterdruckquelle (72) kommuniziert.

8. System (70) nach Anspruch 7, wobei das Führungsrohr (8) zur fluiddichten Befestigung auf dem Schraubstutzen (4) eingerichtet ist und zwischen dem Innenbauteil (10) und dem Führungsrohr (8) eine Dichtung vorhanden ist, welche das Innenbauteil (10) gegenüber dem Führungsrohr (8) fluiddicht abdichtet.

9. System (70) nach Anspruch 7 oder 8, wobei das Innenbauteil (10) zwischen einer Absaugposition und einer Siegelposition verschiebbar in dem Führungsrohr (8) geführt ist, und wobei das Innenbauteil (10) in der Absaugposition in einem Abschnitt des Führungsrohrs (8) angeordnet ist, der in einem auf dem Schraubstutzen (4) montierten Zustand des Führungsrohrs (8) eine Stirnseite (32) des Schraubstutzens (4) in Axialrichtung (A) überragt, und wobei das Innenbauteil (10) in der Siegelposition an einer Position in dem Führungsrohr (8) angeordnet ist, in der die Halterung (20) des Innenbauteils (10) den Adapter (22) der Innenhülle (24) mit dem Schraubstutzen (4), insbesondere einen Kragen (30) des Adapters (22) mit der Stirnseite (32) des Schraubstutzens (4), in Kontakt bringt, insbesondere ferner umfassend eine Arretierung, mit der das Innenbauteil (10) in der Absaugposition gegenüber dem Führungsrohr (8) arretierbar ist.

10. System (70) nach einem der Ansprüche 7 bis 9, wobei die Halterung (20) des Innenbauteils (10) eine Heizeinrichtung (54) umfasst, welche dazu eingerichtet ist, den Adapter (22) der Innenhülle (24) zumindest abschnittsweise zu erwärmen, so dass der Adapter (22) mit dem Schraubstutzen (4) verbindbar, insbesondere verschweißbar, ist,
so dass in der Siegelposition der Adapter (22) mit dem Schraubstutzen (4) verbindbar ist,
die Heizeinrichtung (54) dazu eingerichtet ist, einen von dem Adapter (22) der Innenhülle (24) umfassten Kragen (30) zu erwärmen und mit einer Stirnseite (32) des Schraubstutzens (4) zu verbinden,
wobei die Heizeinrichtung (54) insbesondere als ein sich zumindest abschnittsweise in Umfangsrichtung erstreckendes Siegelband ausgeführt ist, und wobei die Heizeinrichtung (54) auf einem in Axialrichtung (A) elastisch verformbaren Lager montiert ist, wobei insbesondere zwischen dem Siegelband und dem Innenbauteil (10) ein Lager aus einem wärmebeständigen expandierten Material, ferner insbesondere Silikonschaum, vorhanden ist.

11. System (70) nach einem der Ansprüche 7 bis 10, wobei der Flüssigkeitsbehälter (6), insbesondere der Schraubstutzen (4) des Flüssigkeitsbehälters (6), aus einem Material mit höherem Schmelzpunkt hergestellt ist als die Innenhülle (24), insbesondere der Adapter (22), ferner insbesondere ein/der Kragen (30) des Adapters (22) der Innenhülle (24).

12. System (70) nach einem der Ansprüche 7 bis 11, wobei das Innenbauteil (10) einen Zuluftkanal (50) umfasst, der einen Luftzutritt aus einer Umgebung in einen von der Innenhülle (24) umschlossenen Raum ermöglicht, wobei die Montagehilfevorrichtung (2) einen Filter (52) umfasst, der derart eingerichtet ist, dass aus der Umgebung in die Innenhülle (24) einströmende Luft den Filter (52) durchströmt.

13. System nach einem der Ansprüche 7 bis 12, wobei das Innenbauteil (10) ein hohlzylindrisches Bauteil ist, dessen äußere Mantelfläche (64) zumindest abschnittsweise an einer Innenseite (18) des Führungsrohrs (8) anliegt, um das Innenbauteil (10) in Axialrichtung (A) verschiebbar in dem Führungsrohr (8) zu führen und wobei insbesondere das Innenbauteil (10) eine Oberseite (58) und eine gegenüberliegende Unterseite (60) umfasst, wobei an der Oberseite (58) der Absaugkanal (34) ausmündet und an der Unterseite (60) die Halterung (20) als vorspringendes Bauteil mit verringertem Durchmesser herausragt, so dass das Innenbauteil (10) an der Unterseite (60) eine in Umfangsrichtung umlaufende Stufe (62) ausbildet, und wobei ferner insbesondere der Absaugkanal (34) in einem ringförmigen Bereich der an der Unterseite (60) vorhandenen Stufe (62) des Innenbauteils (10) ausmündet, welcher sich zwischen der äußeren Mantelfläche (64) und der Halterung (20) erstreckt.

14. Verfahren zum Anordnen einer Innenhülle (24) mit einem Adapter (22), der eine Öffnung (12) der Innenhülle (24) umgibt, in einem Flüssigkeitsbehälter (6), der einen Innenraum (26) umschließt und einen Schraubstutzen (4) umfasst, der eine Öffnung (28) des Flüssigkeitsbehälters (6) umgibt, umfassend die folgenden Schritte:
Anordnen der Innenhülle (24) in dem Innenraum (26) des Flüssigkeitsbehälters (6) derart, dass sich der Adapter (22) der Innenhülle (24) von dem Innenraum (26) durch den Schraubstutzen (4) in eine nicht von dem Flüssigkeitsbehälter (6) umschlossene Umgebung erstreckt,
Aufsetzen einer Montagehilfevorrichtung (2) nach einem der Ansprüche 1 bis 6 auf den Schraubstutzen (4), wobei das Führungsrohr (8) auf den Schraubstutzen (4) aufgesetzt, der Adapter (22) der Innenhülle (24) mit der Halterung (20) des Innenbauteils (10) verbunden wird, und
Absaugen eines zwischen einer Außenseite (42) der Innenhülle (24) und einer Innenseite (18) des Flüssigkeitsbehälters (6) vorhandenen Gases mit der Unterdruckquelle (72),
wobei insbesondere eine Montagehilfevorrichtung (2) nach Anspruch 3 aufgesetzt wird und nach Erreichen eines vorgegebenen Unterdrucks in dem Absaugkanal (34) die Arretierung gelöst wird, wodurch das Innenbauteil (10) durch den atmosphärischen Druck von der Absaugposition in die Siegelposition verschoben wird und
wobei ferner insbesondere eine Montagehilfevorrichtung (2) mit den zusätzlichen Merkmalen nach Anspruch 4 aufgesetzt wird und nach Erreichen der Siegelposition die Heizeinrichtung (54) aktiviert wird und der Adapter (22) der Innenhülle (24) mit dem Schraubstutzen (4) verbunden wird, insbesondere ein Kragen (30) des Adapters (22) mit einer Stirnseite (32) des Schraubstutzens (4) verbunden wird.

15. Verwendung einer Montagehilfevorrichtung (2) nach einem der Ansprüche 1 bis 6 zum Anordnen der Innenhülle (24) in dem Innenraum (26) des Flüssigkeitsbehälters (6), wobei der Flüssigkeitsbehälter (6) Teil eines IBC (76) ist.

## Claims

1. A mounting assistance device (2) which is designed to support mounting of an inner cover (24) in an interior (26) of a liquid container (6), comprising a guide pipe (8) that extends in an axial direction (A) and that is designed to be fastened to a screw-in fitting (4) of the liquid container (6) that surrounds an opening (12), an inner component (10) that is slidingly guided in the axial direction (A) in the guide pipe (8), wherein the inner component (10) comprises a holder (20) which is designed to releasably hold an adapter (22) of the inner cover (24) that surrounds an opening (28) of the inner cover (24) and that is designed, in the mounted state of the inner cover (24), to be fastened to the screw-in fitting (4), and wherein the inner component (10) comprises at least one extraction channel (34) which extends between a delivery end (36) and a suction end (38), wherein the delivery end (36) can be fluidically coupled to a vacuum source and the suction end (38) opens out from the inner component (10) in a portion which is between an inner face (18) of the guide pipe (8) and the holder (20) in a radial direction (R), such that gas present between an outer face (42) of the inner cover (24) and an inner face (44) of the liquid container (6) can be drawn off through the extraction channel (34) by means of the vacuum source.

2. The mounting assistance device (2) according to claim 1, wherein the guide pipe (8) is designed to be fastened in a fluid-tight manner on the screw-in fitting (4) and a seal which seals off the inner component (10) with respect to the guide pipe (8) in a fluid-tight manner is present between the inner component (10) and the guide pipe (8).

3. The mounting assistance device (2) according to claim 1 or 2, wherein the inner component (10) is slidingly guided in the guide sleeve (8) between an extraction position and a sealing position, and wherein, in the extraction position, the inner component (10) is arranged in a portion of the guide pipe (8) which, in a state of the guide pipe (8) mounted on the screw-in fitting (4), protrudes beyond an end face (32) of the screw-in fitting (4) in an axial direction (A), and wherein the inner component (10), in the sealing position, is arranged at a position in the guide pipe (8) in which the holder (20) of the inner component (10) brings the adapter (22) of the inner cover (24) into contact with the screw-in fitting (4), in particular a collar (30) of the adapter with the end face (32) of the screw-in fitting (4), in particular further comprising a locking means (48) by means of which the inner component (10) can be locked in the extraction position with respect to the guide pipe (8).

4. The mounting assistance device (2) according to any one of the preceding claims, wherein the holder (20) of the inner component (10) comprises a heating apparatus (54) which is designed to heat the adapter (22) of the inner cover (24) at least in portions.

5. The mounting assistance device (2) according to any one of the preceding claims, wherein the inner component (10) comprises a supply air channel (50) which allows for ingress of air from surroundings into a space enclosed by the inner cover (24), wherein a filter (52) is present which is designed such that air flowing from the surroundings into the inner cover (24) flows through the filter (52).

6. The mounting assistance device (2) according to any one of the preceding claims, wherein the inner component (10) is a hollow-cylindrical component of which the outer jacket surface (64) adjoins an inner face (18) of the guide pipe (8) at least in portions in order to slidingly guide the inner component (10) in an axial direction (A) in the guide pipe (8), and wherein, in particular, the inner component (10) comprises an upper face (58) and an opposing lower face (60), wherein the extraction channel (34) opens out at the upper face (58) and the holder (20) protrudes at the lower face (60) as a projecting component having a reduced diameter, such that the inner component (10) forms a circumferential step (62) in a circumferential direction at the lower face (60), and wherein, further in particular, the extraction channel (34) opens out in an annular region of the step (62) of the inner component (10) that is present at the lower face (60), which annular region extends between the outer jacket surface (64) and the holder (20).

7. A system (70), comprising a liquid container (6) which encloses an interior (26), an inner cover (24) which is designed for arrangement in the interior (26) of the liquid container (6), a vacuum source (72), and a mounting assistance device (2) according to claim 1, wherein the delivery end (36) is in fluid communication with the vacuum source (72).

8. The system (70) according to claim 7, wherein the guide pipe (8) is designed for fluid-tight fastening on the screw-in fitting (4) and a seal which seals off the inner component (10) with respect to the guide pipe (8) in a fluid-tight manner is present between the inner component (10) and the guide pipe (8).

9. The system (70) according to claim 7 or 8, wherein the inner component (10) is slidingly guided in the guide pipe (8) between an extraction position and a sealing position, and wherein the inner component (10), in the extraction position, is arranged in a portion of the guide pipe (8) which protrudes beyond an end face (32) of the screw-in fitting (4) in an axial direction (A) in a state of the guide pipe (8) mounted on the screw-in fitting (4), and wherein the inner component (10), in the sealing position, is arranged at a position in the guide pipe (8) in which the holder (20) of the inner component (10) brings the adapter (22) of the inner cover (24) into contact with the screw-in fitting (4), in particular a collar (30) of the adapter (22) with the end face (32) of the screw-in fitting (4), in particular further comprising a locking means by means of which the inner component (10) can be locked in the extraction position with respect to the guide pipe (8).

10. The system (70) according to any one of claims 7 to 9, wherein the holder (20) of the inner component (10) comprises a heating apparatus (54) which is designed to heat the adapter (22) of the inner cover (24) at least in portions, such that the adapter (22) can be connected, in particular welded, to the screw-in fitting (4),
such that, in the sealing position, the adapter (22) can be connected to the screw-in fitting (4),
the heating apparatus (54) is designed to heat a collar (30) comprised by the adapter (22) of the inner cover (24) and to connect said collar to an end face (32) of the screw-in fitting (4),
wherein the heating apparatus (54) is designed, in particular, as a sealing strip that extends in the circumferential direction at least in portions, and wherein the heating apparatus (54) is mounted on a bearing that is elastically deformable in an axial direction (A), wherein, in particular, a bearing consisting of a heat-resistant expanded material, further in particular silicone foam, is present between the sealing strip and the inner component (10).

11. The system (70) according to any one of claims 7 to 10, wherein the liquid container (6), in particular the screw-in fitting (4) of the liquid container (6), is manufactured from a material having a higher melting point than the inner cover (24), in particular the adapter (22), further in particular a/the collar (30) of the adapter (22) of the inner cover (24).

12. The system (70) according to any one of claims 7 to 11, wherein the inner component (10) comprises a supply air channel (50) which allows for ingress of air from surroundings into a space enclosed by the inner cover (24), wherein the mounting assistance device (2) comprises a filter (52) which is designed such that air flowing from the surroundings into the inner cover (24) flows through the filter (52).

13. The system according to any one of claims 7 to 12, wherein the inner component (10) is a hollow-cylindrical component of which the outer jacket surface (64) adjoins an inner face (18) of the guide pipe (8) at least in portions in order to slidingly guide the inner component (10) in an axial direction (A) in the guide pipe (8) and wherein, in particular, the inner component (10) comprises an upper face (58) and an opposing lower face (60), wherein the extraction channel (34) opens out at the upper face (58) and the holder (20) protrudes at the lower face (60) as a projecting component having a reduced diameter, such that the inner component (10) forms a circumferential step (62) in a circumferential direction at the lower face (60), and wherein, further in particular, the extraction channel (34) opens out in an annular region of the step (62) of the inner component (10) that is present at the lower face (60), which annular region extends between the outer jacket surface (64) and the holder (20).

14. A method for arranging an inner cover (24) with an adapter (22) that surrounds an opening (12) of the inner cover (24) in a liquid container (6) which encloses an interior (26) and comprises a screw-in fitting (4) which surrounds an opening (28) of the liquid container (6), said method comprising the following steps:
arranging the inner cover (24) in the interior (26) of the liquid container (6) such that the adapter (22) of the inner cover (24) extends from the interior (26) through the screw-in fitting (4) into surroundings not enclosed by the liquid container (6),
fitting a mounting assistance device (2) according to any one of claims 1 to 6 on the screw-in fitting (4), wherein the guide pipe (8) is fitted on the screw-in fitting (4), the adapter (22) of the inner cover (24) is connected to the holder (20) of the inner component (10), and
drawing off a gas present between an outer face (42) of the inner cover (24) and an inner face (18) of the liquid container (6) by means of the vacuum source (72),
wherein, in particular, a mounting assistance device (2) according to claim 3 is fitted and, after a predefined negative pressure has been achieved in the extraction channel (34), the locking means is released, as a result of which the inner component (10) is slid from the extraction position into the sealing position by means of the atmospheric pressure, and
wherein, further in particular, a mounting assistance device (2) having the additional features of claim 4 is fitted and, after the sealing position is reached, the heating apparatus (54) is activated and the adapter (22) of the inner cover (24) is connected to the screw-in fitting (4), in particular a collar (30) of the adapter (22) is connected to an end face (32) of the screw-in fitting (4).

15. A use of a mounting assistance device (2) according to any one of claims 1 to 6 for arranging the inner cover (24) in the interior (26) of the liquid container (6), wherein the liquid container (6) is part of an IBC (76).

## Revendications

1. Dispositif (2) d'aide au montage, qui est conçu pour aider au montage d'une enveloppe intérieure (24) dans un espace intérieur (26) d'un réservoir de liquide (6), comprenant un tube de guidage (8) s'étendant dans une direction axiale (A), qui est conçu pour être fixé à un manchon fileté (4) du réservoir de liquide (6) entourant une ouverture (12), un composant interne (10) guidé de manière coulissante dans le tube de guidage (8) dans la direction axiale (A), le composant interne (10) comprenant un support (20) qui est conçu pour recevoir un adaptateur (22) de l'enveloppe intérieure (24) entourant une ouverture (28) de l'enveloppe intérieure (24), qui, à l'état de montage de l'enveloppe intérieure (24), est conçu de façon à être fixé au manchon fileté (4), afin d'être maintenu de manière amovible, et le composant interne (10) présentant au moins un canal d'aspiration (34) qui s'étend entre une extrémité de transport (36) et une extrémité d'aspiration (38), l'extrémité de transport (36) étant apte à être reliée fluidiquement à une source de dépression et l'extrémité d'aspiration (38) débouchant hors du composant interne (10), dans une section qui s'étend dans une direction radiale (R) entre un côté intérieur (18) du tube de guidage (8) et le support (20), de sorte que le gaz présent entre un côté extérieur (42) de l'enveloppe intérieure (24) et un côté intérieur (44) du réservoir de liquide (6) est apte à être aspiré au moyen de la source de dépression, par le canal d'aspiration (34).

2. Dispositif (2) d'aide au montage selon la revendication 1, dans lequel le tube de guidage (8) est agencé pour être fixé de manière étanche aux fluides sur le manchon fileté (4) et un joint d'étanchéité est présent entre le composant interne (10) et le tube de guidage (8), lequel assure l'étanchéité aux fluides du composant interne (10) par rapport au tube de guidage (8).

3. Dispositif (2) d'aide au montage selon la revendication 1 ou la revendication 2, dans lequel le composant interne (10) est guidé de manière mobile dans le manchon de guidage (8) entre une position d'aspiration et une position d'étanchéité, et dans lequel le composant interne (10) est disposé, dans la position d'aspiration, dans une section du tube de guidage (8) qui, dans un état de montage du tube de guidage (8) sur le manchon fileté (4), dépasse d'une face frontale (32) du manchon fileté (4) dans la direction axiale (A), et le composant interne (10) étant, dans la position d'étanchéité, placé dans une position dans le tube de guidage (8) dans laquelle le support (20) du composant interne (10) relie l'adaptateur (22) de l'enveloppe intérieure (24) au manchon fileté (4), en particulier une collerette (30) de l'adaptateur (22) avec la face frontale (32) du manchon fileté (4), notamment comprenant en outre une partie d'arrêt (48) permettant de bloquer dans la position d'aspiration le composant interne (10) par rapport au tube de guidage (8).

4. Dispositif (2) d'aide au montage selon l'une des revendications précédentes, dans lequel le support (20) du composant interne (10) comprend un dispositif de chauffage (54) qui est conçu pour chauffer au moins partiellement l'adaptateur (22) de l'enveloppe interne (24).

5. Dispositif (2) d'aide au montage selon l'une des revendications précédentes, dans lequel le composant interne (10) comprend un canal d'amenée d'air (50) qui permet une entrée d'air provenant de l'environnement dans un espace entouré par l'enveloppe intérieure (24), un filtre (52) étant présent, qui est agencé de telle sorte que l'air entrant dans l'enveloppe intérieure (24) depuis l'environnement traverse le filtre (52).

6. Dispositif (2) d'aide au montage selon l'une des revendications précédentes, dans lequel le composant interne (10) est un composant cylindrique creux dont la surface d'enveloppe extérieure (64) s'applique au moins partiellement contre une face intérieure (18) du tube de guidage (8), afin de guider le composant interne (10) dans le tube de guidage (8) de manière à ce qu'il puisse se déplacer dans la direction axiale (A), et dans lequel le composant interne (10) comprend notamment une face supérieure (58) et une face inférieure opposée (60), le canal d'aspiration (34) débouchant sur la face supérieure (58) et le support (20) dépassant de la face inférieure (60) sous la forme d'une partie en saillie de diamètre réduit, de sorte que le composant interne (10) forme sur la face inférieure (60) une marche circonférentielle (62), et, notamment, le canal d'aspiration (34) débouchant en outre dans une zone annulaire de la marche (62) du composant interne (10) présent sur la face inférieure (60), qui s'étend entre la surface d'enveloppe extérieure (64) et le support (20).

7. Système (70) comprenant un réservoir de liquide (6) renfermant un espace intérieur (26), une enveloppe intérieure (24) conçue pour être disposée dans l'espace intérieur (26) du réservoir de liquide (6), une source de dépression (72) et un dispositif (2) d'aide au montage selon la revendication 1, dans lequel l'extrémité de transport (36) communique fluidiquement avec la source de dépression (72).

8. Système (70) selon la revendication 7, dans lequel le tube de guidage (8) est agencé pour être fixé de manière étanche aux fluides sur le manchon fileté (4) et un joint est présent entre le composant interne (10) et le tube de guidage (8), lequel joint rend le composant interne (10) étanche aux fluides par rapport au tube de guidage (8).

9. Système (70) selon la revendication 7 ou la revendication 8, dans lequel le composant interne (10) est guidé de manière mobile dans le tube de guidage (8) entre une position d'aspiration et une position d'étanchéité, et dans lequel le composant interne (10) est placé, dans la position d'aspiration, dans une section du tube de guidage (8) qui, dans un état monté du tube de guidage (8) sur le manchon fileté (4), dépasse d'une face frontale (32) du manchon fileté (4) dans la direction axiale (A), et le composant interne (10) étant placé, dans la position d'étanchéité, dans une position dans le tube de guidage (8) dans laquelle le support (20) du composant interne (10) relie l'adaptateur (22) de l'enveloppe intérieure (24) au manchon fileté (4), en particulier relie une collerette (30) de l'adaptateur (22) à la face frontale (32) du manchon fileté (4), et en particulier comprenant en outre une partie d'arrêt avec laquelle le composant interne (10) est apte à être bloqué dans la position d'aspiration par rapport au tube de guidage (8).

10. Système (70) selon l'une des revendications 7 à 9, dans lequel le support (20) du composant interne (10) comprend un dispositif de chauffage (54) qui est conçu pour chauffer au moins partiellement l'adaptateur (22) de l'enveloppe intérieure (24), de sorte que l'adaptateur (22) est apte à être relié, notamment soudé, au manchon fileté (4),
de sorte que, dans la position d'étanchéité, l'adaptateur (22) est apte à être relié au manchon fileté (4),
le dispositif de chauffage (54) est conçu pour chauffer une collerette (30) entourée par l'adaptateur (22) de l'enveloppe intérieure (24) et pour la relier à une face frontale (32) du manchon fileté (4),
le dispositif de chauffage (54) est réalisé en particulier sous la forme d'une bande d'étanchéité s'étendant au moins partiellement dans la direction circonférentielle, et le dispositif de chauffage (54) est monté sur un palier déformable élastiquement dans la direction axiale (A), en particulier un palier en un matériau expansé résistant à la chaleur, notamment en mousse de silicone, qui est en particulier présent entre la bande d'étanchéité et le composant interne (10).

11. Système (70) selon l'une des revendications 7 à 10, dans lequel le réservoir de liquide (6), en particulier le manchon fileté (4) du réservoir de liquide (6), est réalisé en un matériau à point de fusion plus élevé que celui de l'enveloppe intérieure (24), notamment de l'adaptateur (22), et plus particulièrement d'une/la collerette (30) de l'adaptateur (22) de l'enveloppe intérieure (24).

12. Système (70) selon l'une des revendications 7 à 11, dans lequel le composant interne (10) comprend un conduit d'amenée d'air (50) permettant une entrée d'air provenant de l'environnement dans un espace délimité par l'enveloppe intérieure (24), le dispositif (2) d'aide au montage comprenant un filtre (52) agencé de manière à ce que l'air entrant dans l'enveloppe intérieure (24) depuis l'environnement traverse le filtre (52).

13. Système selon l'une des revendications 7 à 12, dans lequel le composant interne (10) est un élément cylindrique creux dont la surface d'enveloppe extérieure (64) s'applique au moins partiellement contre une face intérieure (18) du tube de guidage (8), afin de guider le composant interne (10) dans le tube de guidage (8) de manière à ce qu'il puisse se déplacer dans la direction axiale (A), et dans lequel en particulier le composant interne (10) comprend une face supérieure (58) et une face inférieure opposée (60), le canal d'aspiration (34) débouchant sur la face supérieure (58) et le support (20) dépassant de la face inférieure (60) sous la forme d'une pièce en saillie de diamètre réduit, de sorte que le composant interne (10) forme sur la face inférieure (60) une marche circonférentielle (62), et notamment le canal d'aspiration (34) débouchant en outre dans une zone annulaire de la marche (62) du composant interne (10) sur la face inférieure (60), qui s'étend entre la surface d'enveloppe extérieure (64) et le support (20).

14. Procédé de mise en place d'une enveloppe interne (24) avec un adaptateur (22) entourant une ouverture (12) de l'enveloppe interne (24) dans un réservoir de liquide (6) renfermant un espace intérieur (26) et comprenant un manchon fileté (4) entourant une ouverture (28) du réservoir de liquide (6), comprenant les étapes suivantes :
mise en place de l'enveloppe intérieure (24) dans l'espace intérieur (26) du réservoir de liquide (6) de telle sorte que l'adaptateur (22) de l'enveloppe intérieure (24) s'étende depuis l'espace intérieur (26) à travers le manchon fileté (4) dans un environnement non entouré par le réservoir de liquide (6), mise en place d'un dispositif (2) d'aide au montage selon l'une des revendications 1 à 6 sur le manchon fileté (4), le tube de guidage (8) étant mis en place sur le manchon fileté (4), l'adaptateur (22) de l'enveloppe intérieure (24) étant relié au support (20) du composant interne (10), et
aspiration d'un gaz présent entre un côté extérieur (42) de l'enveloppe intérieure (24) et un côté intérieur (18) du réservoir de liquide (6) au moyen de la source de dépression (72),
un dispositif (2) d'aide au montage selon la revendication 3 étant notamment mis en place et, après avoir atteint une dépression prédéfinie dans le canal d'aspiration (34), le blocage étant libéré, ce qui permet de déplacer le composant interne (10) depuis la position d'aspiration jusqu'à la position d'étanchéité sous l'effet de la pression atmosphérique, et
un dispositif (2) d'aide au montage, qui présente en outre les caractéristiques supplémentaires selon la revendication 4, étant notamment mis en place et, une fois la position d'étanchéité atteinte, le dispositif de chauffage (54) est activé et l'adaptateur (22) de l'enveloppe intérieure (24) est relié au manchon fileté (4), notamment une collerette (30) de l'adaptateur (22) est reliée à une face frontale (32) du manchon fileté (4).

15. Utilisation d'un dispositif (2) d'aide au montage selon l'une des revendications 1 à 6 de façon à disposer l'enveloppe interne (24) dans l'espace intérieur (26) du réservoir de liquide (6), le réservoir de liquide (6) faisant partie d'un GRV (76) (grand récipient pour vrac).
